# EUROPEAN PATENT APPLICATION

(11) **EP 4 756 341 A1**
(43) Date of publication of application: **10.06.2026**
(21) Application number: 24848256.4
(22) Date of filing: 30.07.2024
(51) Int. Cl.: F25D 29/00, F25D 17/06, F25D 19/00, B60N 3/10, F25D 23/00, F25D 11/00

(54) **TEMPERATURE CONTROL DEVICE OF ON-BOARD REFRIGERATOR, ON-BOARD REFRIGERATOR AND VEHICLE**

(30) Priority: 31.07.2023 CN 202322049058 U
(71) Applicant: BYD Company Limited, Shenzhen, Guangdong 518118 (CN)
(72) Inventor: GONG, Wenqiang, Shenzhen, Guangdong 518118 (CN); XU, Feng, Shenzhen, Guangdong 518118 (CN); ZHU, Peng, Shenzhen, Guangdong 518118 (CN); WANG, Weiwei, Shenzhen, Guangdong 518118 (CN); XIAO, Shiying, Shenzhen, Guangdong 518118 (CN)
(74) Representative: Mathys & Squire
(86) International application number: PCT/CN2024/108372
(87) International publication number: WO 2025/026301

(57) **Abstract**

A vehicle (1000), provided with an on-board refrigerator (100). A temperature control device (10) of the on-board refrigerator (100) includes: a mounting bracket (1); a condenser (31), the condenser (31) is mounted on the mounting bracket (1); and a first fan (36), the first fan (36) are mounted on the mounting bracket (1), the first fan (36) and the condenser (31) are stacked in the height direction of the on-board refrigerator (100), and the first fan (36) is configured to blowing gas to the condenser (31) so as to dissipate heat of the condenser (31).

## Description

### CROSS-REFERENCE TO RELATED APPLICATIONS

The present disclosure claims priority to Chinese Patent Application No. 202322049058.2 filed on July 31, 2023, titled "TEMPERATURE CONTROL DEVICE OF ON-BOARD REFRIGERATOR, ON-BOARD REFRIGERATOR AND VEHICLE", which is incorporated herein by reference in its entirety.

### FIELD

The present application relates to a temperature control device for a vehicle-mounted refrigerator, a vehicle-mounted refrigerator, and a vehicle.

### BACKGROUND

In the related art, the vehicle-mounted refrigerator has a large overall size due to the large space occupied by the condenser and the cooling fan, which is not conducive to the promotion of the vehicle-mounted refrigerator.

### SUMMARY

The technical problem to be solved by the present application is: aiming at the technical problem that the existing vehicle-mounted refrigerator occupies a large amount of space, to provide a temperature control device for a vehicle-mounted refrigerator, a vehicle-mounted refrigerator, and a vehicle.

To solve the above technical problem, on one hand, an embodiment of the present application provides a temperature control device for a vehicle-mounted refrigerator, including a mounting bracket, and further including:
a condenser, the condenser being mounted on the mounting bracket;
a first fan, the first fan being mounted on the mounting bracket, wherein the first fan and the condenser are stacked along a height direction of the vehicle-mounted refrigerator, and the first fan is configured to blow gas to the condenser for cooling the condenser.

According to the temperature control device for a vehicle-mounted refrigerator of the embodiment of the present application, the first fan and the condenser are stacked along the height direction of the vehicle-mounted refrigerator, so that the first fan and the condenser are stacked up and down in a horizontal posture, which saves more space in the height direction, can reduce the overall size of the vehicle-mounted refrigerator, and facilitates embedding and installation in the entire vehicle.

In an embodiment, a center of the first fan and a center of the condenser are located on a straight line along the height direction of the vehicle-mounted refrigerator.

In an embodiment, along the height direction of the vehicle-mounted refrigerator, a projection of the condenser falls within a projection of the first fan.

In an embodiment, the first fan is arranged adjacent to the condenser.

In an embodiment, the first fan is fixed to the condenser so that the first fan is mounted on the mounting bracket.

In an embodiment, the temperature control device further includes a second fan, and the second fan is configured to discharge the gas after cooling the condenser to the outside of the vehicle-mounted refrigerator.

In an embodiment, along the height direction of the vehicle-mounted refrigerator, the condenser is located between the first fan and the second fan.

In an embodiment, the mounting bracket includes a first bracket and a second bracket connected to the first bracket, the condenser and the first fan are respectively mounted on the first bracket, and the second fan is mounted on the second bracket.

In an embodiment, the temperature control device further includes a compressor, and the compressor is mounted on the second bracket.

In an embodiment, the condenser, the first fan, the second fan, and the compressor are all arranged on a same side of the first bracket.

In an embodiment, the temperature control device further includes a compressor and an acoustic package, the compressor is mounted on the mounting bracket, and the acoustic package wraps an outer surface of the compressor.

In addition, an embodiment of the present application provides a vehicle-mounted refrigerator, which includes a box body and the above-mentioned temperature control device, the box body is provided with a storage space, and the mounting bracket is arranged on the box body.

In an embodiment, the box body includes a main body, the main body includes an outer shell, an inner container, and a foamed insulation layer, the inner container is mounted in the outer shell, the foamed insulation layer is arranged between the inner container and the outer shell, and the storage space is formed inside the inner container.

In an embodiment, the vehicle-mounted refrigerator further includes an item detection module, the item detection module is mounted on an outer wall surface of the inner container, and the item detection module is configured to detect whether an item is placed in the storage space.

In an embodiment, the vehicle-mounted refrigerator further includes an evaporator, and the evaporator is arranged on an outer side wall of the inner container.

In an embodiment, the vehicle-mounted refrigerator further includes a vacuum insulation panel (VIP), the vacuum insulation panel is embedded in the foamed insulation layer, and the vacuum insulation panel is located between the evaporator and the outer shell.

In an embodiment, the vehicle-mounted refrigerator further includes a heating film, the heating film is embedded in the foamed insulation layer, and the heating film is located between the evaporator and the vacuum insulation panel.

In an embodiment, the vehicle-mounted refrigerator further includes a temperature sensor, the temperature sensor is embedded in the foamed insulation layer, and the temperature sensor is configured to detect the temperature in the storage space.

In an embodiment, the vehicle-mounted refrigerator further includes a sterilizing lighting lamp, the sterilizing lighting lamp is mounted on the box body and located in the storage space, and the sterilizing lighting lamp is configured to illuminate and sterilize the storage space.

On the other hand, an embodiment of the present application provides a vehicle, which includes the above-mentioned temperature control device for a vehicle-mounted refrigerator or the above-mentioned vehicle-mounted refrigerator.

### BRIEF DESCRIPTION OF THE DRAWINGS

FIG. 1 is a schematic diagram of a vehicle-mounted refrigerator provided by an embodiment of the present application;
FIG. 2 is a cross-sectional view taken along line A-A in FIG. 1;
FIG. 3 is a partial schematic diagram of the cooling mechanism in FIG. 1;
FIG. 4 is an assembly schematic diagram of the vehicle-mounted refrigerator on a vehicle body provided by an embodiment of the present application;
FIG. 5 is a schematic diagram of a vehicle provided by an embodiment of the present application.

The reference signs in the specification are as follows:
100 - vehicle-mounted refrigerator; 10 - temperature control device; 101 - storage space;
1 - mounting bracket; 13 - second bracket; 14 - first bracket;
2 - item detection module;
3 - cooling mechanism; 31 - condenser; 32 - evaporator; 33 - drier filter; 34 - capillary tube; 35 - compressor; 36 - first fan; 37 - second fan; 38 - acoustic package;
4 - vacuum insulation panel;
5 - heating film;
6 - door body;
7 - circuit board;
8 - main body; 81 - outer shell; 82 - inner container;
200 - vehicle body;
1000 - vehicle.

### DETAILED DESCRIPTION

In order to make the technical problems solved by the present application, the technical solutions and the beneficial effects more clearly understood, the present application will be further described in detail below with reference to the accompanying drawings and embodiments. It will be understood that the specific embodiments described herein are only configured to explain the present application and are not intended to limit the present application.

In the related art, the temperature control device of a vehicle-mounted refrigerator includes a compressor, a condenser, a cooling fan, an evaporator, etc. Among them, the condenser and the cooling fan are fixed together and arranged above the compressor in a vertical posture. At this time, both the central axis of the cooling fan and the central axis of the condenser are perpendicular to the height direction of the vehicle-mounted refrigerator, resulting in the vehicle-mounted refrigerator occupying more space along the height direction and having a large overall size. In addition, due to the relatively narrow and closed installation space of the vehicle-mounted refrigerator, it is difficult for the cooling fan to dissipate the heat emitted by the condenser during operation, so that the heat emitted by the condenser is concentrated around the condenser, and the high-temperature air flow cannot be effectively discharged. This affects the operation of the condenser and the cooling fan, and further affects the overall refrigeration effect and working environment of the vehicle-mounted refrigerator.

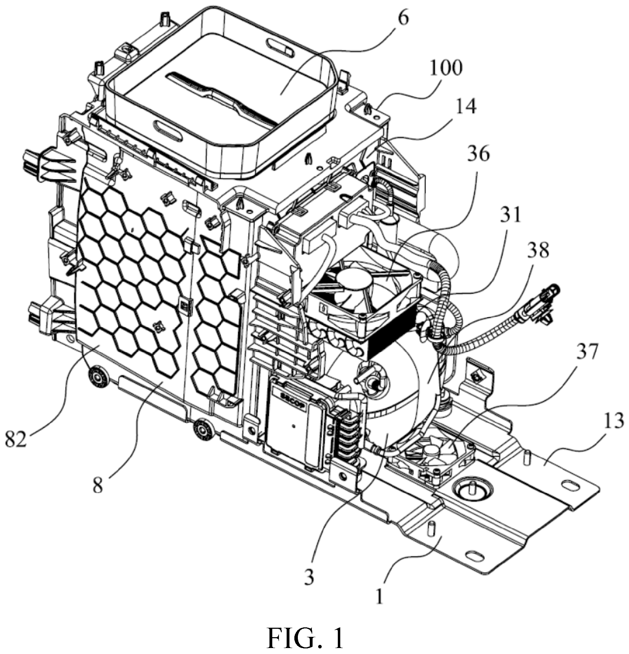

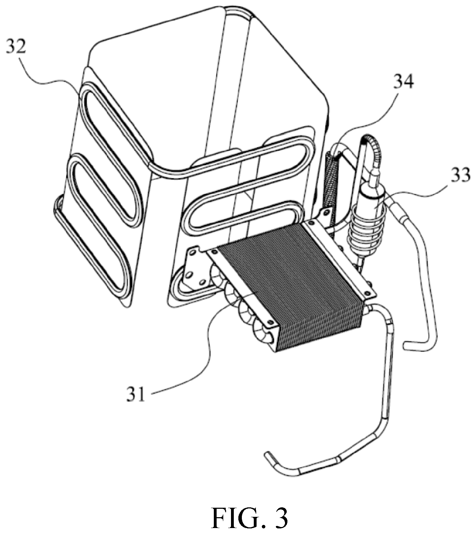

As shown in FIG. 1 to FIG. 3, the vehicle-mounted refrigerator 100 provided by the embodiment of the present application includes a box body and a temperature control device 10. The box body is provided with a storage space 101. The temperature control device 10 includes a mounting bracket 1, a first fan 36, and a condenser 31. The mounting bracket 1 is arranged on the box body, the first fan 36 and the condenser 31 are respectively mounted on the mounting bracket 1, and the first fan 36 and the condenser 31 are stacked along the height direction of the vehicle-mounted refrigerator 100.

The air outlet of the first fan 36 faces the condenser 31, and the first fan 36 is configured to blow low-temperature air to the condenser 31 for cooling the condenser 31.

In the vehicle-mounted refrigerator 100 provided by the embodiment of the present application, the first fan 36 and the condenser 31 are stacked along the height direction of the vehicle-mounted refrigerator 100, so that the first fan 36 and the condenser 31 are stacked up and down in a horizontal posture, which saves more space in the height direction, reduces the overall size of the vehicle-mounted refrigerator 100, and facilitates embedding and installation in the entire vehicle.

In one embodiment, when the vehicle-mounted refrigerator 100 is installed on the vehicle 1000, the height direction of the vehicle 1000 is the height direction of the vehicle-mounted refrigerator 100.

In one embodiment, as shown in FIG. 1, the center of the first fan 36 and the center of the condenser 31 are located on a straight line along the height direction of the vehicle-mounted refrigerator 100, so that the condenser 31 is arranged directly below the first fan 36. Thus, the air outlet of the first fan 36 blows directly to the condenser 31, improving the cooling efficiency of the first fan 36 for the condenser 31.

In one embodiment, as shown in FIG. 1, along the height direction of the vehicle-mounted refrigerator 100, the projection of the condenser 31 falls within the projection of the first fan 36, and the projected area of the first fan 36 is larger than that of the condenser 31. In this way, the entire condenser 31 can be covered by the low-temperature air of the first fan 36, thereby improving the cooling efficiency of the condenser 31 and further improving the efficiency of the temperature control device 10 of the vehicle-mounted refrigerator 100.

In one embodiment, as shown in FIG. 1, the first fan 36 is arranged adjacent to the condenser 31 to shorten the distance between the first fan 36 and the condenser 31, so that the cold air is blown to the condenser 31. This avoids as much as possible the low-temperature air mixing with the high-temperature air flow discharged by the condenser 31 before being blown to the condenser 31, thereby improving the cooling efficiency of the first fan 36 for the condenser 31.

In one embodiment, regarding the installation of the first fan 36, the first fan 36 can be directly mounted on the mounting bracket 1 to realize the direct assembly of the first fan 36 and the mounting bracket 1; alternatively, the first fan 36 can first be mounted on the condenser 31 to fix the first fan 36 and the condenser 31, and then the condenser 31 is mounted on the mounting bracket 1, so that the first fan 36 is indirectly mounted on the mounting bracket 1 through the condenser 31, realizing the indirect assembly of the first fan 36 and the mounting bracket 1.

In one embodiment, as shown in FIG. 1, the temperature control device 10 further includes a second fan 37. The air inlet of the second fan 37 faces the condenser 31, and the second fan 37 is configured to discharge the gas after cooling the condenser 31 to the outside of the vehicle-mounted refrigerator 100.

At this time, the vehicle-mounted refrigerator 100 adopts a dual-fan design, which allows gas to enter through the first fan 36, the temperature rises after being discharged through the condenser 31, and then the gas with the raised temperature is guided by the second fan 37 to be discharged to the outside of the vehicle-mounted refrigerator 100, forming a heat dissipation channel for the vehicle-mounted refrigerator 100 at the condenser 31. This heat dissipation channel can make the high-temperature air flow at the condenser 31 continuously and stably discharged to the outside of the refrigerator, so that the heat emitted by the condenser 31 is no longer concentrated around the condenser 31, but is discharged from the vehicle-mounted refrigerator through the heat dissipation channel. Thus, the heat dissipation efficiency of the condenser 31 is improved, and the refrigeration effect of the vehicle-mounted refrigerator 100 is further enhanced.

In one embodiment, as shown in FIG. 1 to FIG. 3, along the height direction of the vehicle-mounted refrigerator 100, the condenser 31 is located between the first fan 36 and the second fan 37. The central axis of the first fan 36, the central axis of the second fan 37, and the central axis of the condenser 31 may all extend along the height direction of the vehicle-mounted refrigerator 100.

By setting the positions and arrangement directions of the first fan 36, the condenser 31, and the second fan 37, the first fan 36 and the condenser 31 are stacked in a horizontal posture, which saves more space in the height direction, reduces the overall size of the refrigerator, and facilitates embedding and installation in the entire vehicle. Meanwhile, on the basis of fully cooling the condenser 31, the heat emitted by the condenser 31 can be dissipated from the bottom of the refrigerator to the outside of the vehicle-mounted refrigerator 100 through the top-to-bottom heat dissipation channel, accelerating the heat dissipation at the condenser 31, thereby improving the working efficiency of the condenser 31 and the refrigeration effect of the vehicle-mounted refrigerator 100. At the same time, by dissipating heat from the bottom of the vehicle-mounted refrigerator 100, the impact of high-temperature gas on the in-vehicle riding experience can be reduced.

In one embodiment, as shown in FIG. 1 to FIG. 3, the mounting bracket 1 includes a first bracket 14 and a second bracket 13 connected to the first bracket 14. The condenser 31 and the first fan 36 are respectively mounted on the first bracket 14, and the second fan 37 is mounted on the second bracket 13, thereby realizing the installation of the condenser 31 and each fan. Meanwhile, the outlet of the heat dissipation channel can be located on the second bracket 13 to discharge the high-temperature air flow to the outside of the vehicle-mounted refrigerator 100 through the second bracket 13, that is, from the bottom of the vehicle-mounted refrigerator 100 to the outside of the vehicle-mounted refrigerator 100.

In one embodiment, as shown in FIG. 1, the first bracket 14 may be arranged along the height direction of the vehicle-mounted refrigerator 100, and the second bracket 13 may be arranged along a direction perpendicular to the height direction of the vehicle-mounted refrigerator 100, or the second bracket 13 may be arranged along the extending direction of the bottom plate of the box body of the vehicle-mounted refrigerator 100 to form the structure of the mounting bracket 1. Meanwhile, the wind directions of the first fan 36 and the second fan 37 are ensured to be consistent, facilitating heat dissipation.

At this time, the second bracket 13 and the first fan 36 are respectively located on opposite sides of the condenser 31 along the height direction of the vehicle-mounted refrigerator 100. The second fan 37 is arranged on the second bracket 13, that is, the first fan 36 and the second fan 37 are respectively located on opposite sides of the condenser 31 along the height direction of the vehicle-mounted refrigerator 100, and the condenser 31 is located between the first fan 36 and the second fan 37 along the height direction of the vehicle-mounted refrigerator 100.

In one embodiment, the mounting bracket 1 may be integrally formed with the box body of the vehicle-mounted refrigerator 100 as a part of the box body of the vehicle-mounted refrigerator 100; alternatively, it may be independent of the box body of the vehicle-mounted refrigerator 100, and the mounting bracket 1 and the box body of the vehicle-mounted refrigerator 100 may be fixed by clamping, riveting, or other methods.

Further, the first bracket 14 and the second bracket 13 of the mounting bracket 1 may be respectively arranged relative to the box body of the vehicle-mounted refrigerator 100. The first bracket 14 may be integrally formed with the box body of the vehicle-mounted refrigerator 100 as a part of the box body of the vehicle-mounted refrigerator 100; alternatively, it may be independent of the box body of the vehicle-mounted refrigerator 100, and the first bracket 14 and the box body of the vehicle-mounted refrigerator 100 may be fixed by clamping, riveting, or other methods. The second bracket 13 may be integrally formed with the box body of the vehicle-mounted refrigerator 100 as a part of the box body of the vehicle-mounted refrigerator 100; alternatively, it may be independent of the box body of the vehicle-mounted refrigerator 100, and the second bracket 13 and the box body of the vehicle-mounted refrigerator 100 may be fixed by clamping, riveting, or other methods.

In a specific embodiment, the first bracket 14 may include a mounting side plate, and the second bracket 13 may include a mounting base plate. The mounting side plate is connected to the box body of the vehicle-mounted refrigerator 100 by means of integral molding, and the mounting base plate is connected to the box body of the vehicle-mounted refrigerator 100 by means of riveting, so as to realize the connection between the mounting bracket 1 and the box body of the vehicle-mounted refrigerator 100.

Further, the condenser 31 is mounted on the mounting side plate, the first fan 36 is fixed on the condenser 31, and the second fan 37 is mounted on the mounting base plate, so as to realize the assembly of the condenser 31 and each fan.

In one embodiment, as shown in FIG. 1 to FIG. 3, the box body includes a main body 8. The main body 8 includes an outer shell 81, an inner container 82, and a foamed insulation layer (not shown in the figure). The inner container 82 is embedded in the outer shell 81, and the foamed insulation layer is arranged between the inner container 82 and the outer shell 81. The storage space 101 is formed inside the inner container 82. The condenser 31 and the first fan 36 are respectively mounted on the outer wall of the outer shell 81.

The foamed insulation layer is located between the inner container 82 and the outer shell 81, which can reduce the heat transfer between the inner container 82 and the outside air, stabilize the temperature of the inner container 82, and keep it at the set temperature for a long time.

In one embodiment, as shown in FIG. 1 to FIG. 3, the vehicle-mounted refrigerator 100 further includes a compressor 35. The compressor 35 is mounted on the second bracket 13 and communicated with the condenser 31. The compressor 35 is located on the side of the condenser 31 facing away from the first fan 36. The condenser 31 is located between the first fan 36 and the second fan 37 along the height direction of the vehicle-mounted refrigerator 100, and the compressor 35 is located between the condenser 31 and the second fan 37 along the height direction of the vehicle-mounted refrigerator 100. That is, the first fan 36 and the condenser 31 are arranged above the compressor 35 in a horizontal posture.

The second fan 37 and the compressor 35 are arranged in a displaced manner along a direction perpendicular to the height of the vehicle-mounted refrigerator 100.

The compressor 35 is located at the air outlet of the first fan 36. The heat generated by the compressor 35 during operation can be timely taken away by the air flow in the heat dissipation path, which can ensure that the compressor 35 is within the normal operating temperature range and operates more stably. Meanwhile, due to the displaced arrangement of the second fan 37 and the compressor 35, the compressor 35 can be prevented from blocking the air inlet of the second fan 37, improving the cooling effect.

In one embodiment, as shown in FIG. 1 to FIG. 3, the vehicle-mounted refrigerator 100 further includes an item detection module 2. The item detection module 2 is mounted on the outer wall surface of the inner container 82, and the item detection module 2 is located at the bottom of the inner container 82. The item detection module 2 is configured to detect whether an item is placed in the storage space 101.

By installing the item detection module 2 on the mounting bracket 1, the item detection module 2 can detect the storage space 101 to determine whether an item is placed in the storage space 101. Meanwhile, the item detection module 2 can timely transmit the detection information to the control terminal, avoiding missing items, and also avoiding the situation where the refrigerator continues to work without any items inside, thereby reducing power consumption and saving the overall vehicle power.

In one embodiment, as shown in FIG. 1 to FIG. 3, the vehicle-mounted refrigerator 100 further includes an evaporator 32, a drier filter 33, and a capillary tube 34. The evaporator 32 is attached to the outer wall of the inner container 82.

The condenser 31, drier filter 33, capillary tube 34, evaporator 32, and compressor 35 are sequentially connected to form a cooling mechanism 3. The cooling mechanism 3 is formed with a cooling circuit for cooling the storage space 101, so as to realize the cooling of the storage space 101.

By using the drier filter 33, the problem of refrigerant blockage caused by long-term use of the refrigerator can be prevented, and the service life of the refrigerator can be prolonged. In addition, by using the capillary tube 34, the transmission rate of the refrigerant can be increased, and the refrigeration effect can be improved.

At the same time, by closely attaching the inner container 82 to the evaporator 32, there is no need to provide a double layer. In a specific embodiment, each surface of the inner container 82 can be covered with the evaporator 32, so that the refrigeration area is larger, the transfer of cooling capacity is faster, and the refrigeration rate is higher. Preferably, the material of the inner container 82 can be a metal material with a high thermal conductivity.

In one embodiment, as shown in FIG. 1, the condenser 31, the first fan 36, the second fan 37, and the compressor 35 are all arranged on the same side of the mounting bracket 1, and the condenser 31, the first fan 36, the second fan 37, and the compressor 35 are all arranged on the same side of the box body of the vehicle-mounted refrigerator 100, so as to realize the integration of the internal structure of the vehicle-mounted refrigerator 100 and minimize the size of the vehicle-mounted refrigerator 100.

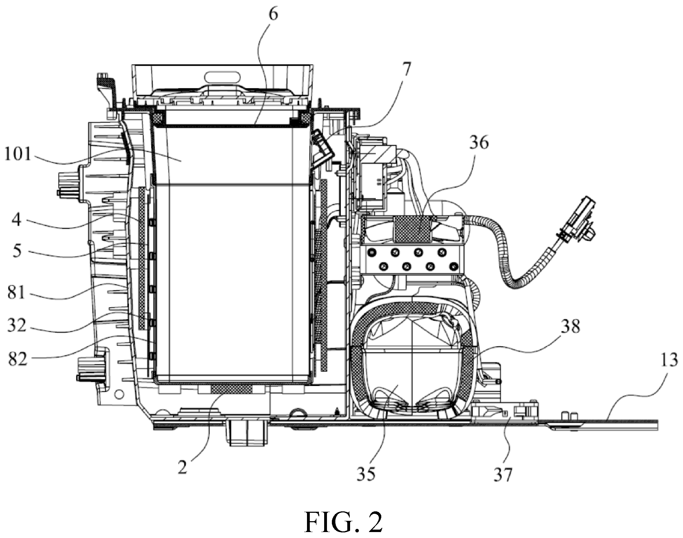

In one embodiment, as shown in FIG. 1 and FIG. 2, the vehicle-mounted refrigerator 100 further includes an acoustic package 38, which wraps the outer surface of the compressor 35.

By wrapping the acoustic package 38 on the surface of the compressor 35, the noise generated by the compressor 35 during operation can be effectively isolated and absorbed, improving the user experience.

In one embodiment, as shown in FIG. 2, the vehicle-mounted refrigerator 100 further includes a vacuum insulation panel 4. The vacuum insulation panel 4 is embedded in the foamed insulation layer, and the vacuum insulation panel 4 is located between the evaporator 32 and the outer shell 81.

By embedding the vacuum insulation panel 4 in the foamed insulation layer, the heat insulation effect can be greatly improved, allowing the refrigerator to have a faster refrigeration rate, longer heat preservation time, and more stable temperature in the inner container 82.

In one embodiment, as shown in FIG. 2, the vehicle-mounted refrigerator 100 further includes a heating film 5. The heating film 5 is embedded in the foamed insulation layer, and the heating film 5 is located between the evaporator 32 and the vacuum insulation panel 4. It will be understood that at this time, in the box body 1 part of the vehicle-mounted box body, the structure from the inside out is sequentially: inner container 82, evaporator 32, heating film 5, and vacuum insulation panel 4.

By providing the heating film 5, the refrigerator can have a heating function on the basis of refrigeration to meet the user's heating needs.

In one embodiment, the vehicle-mounted refrigerator 100 further includes a temperature sensor (not shown in the figure). The temperature sensor is embedded in the foamed insulation layer, and the temperature sensor is configured to detect and feed back the temperature in the storage space 101 in real time.

The temperature sensor can be arranged closely to the heating film 5, which can detect and feed back the refrigerator temperature in real time. After reaching the set temperature, the refrigeration or heating function can be turned off to prevent the refrigerator from overcooling or overheating, thereby protecting the items in the refrigerator from damage. At the same time, it can also avoid power waste caused by the continuous operation of the compressor 35, the first fan 36, the second fan 37, and the heating film 5, saving the overall vehicle power.

In one embodiment, as shown in FIG. 2, the vehicle-mounted refrigerator 100 further includes a sterilizing lighting lamp. The sterilizing lighting lamp is mounted on the box body 1 and located in the storage space 101, and is configured to illuminate and sterilize the storage space 101.

By providing the sterilizing lighting lamp, the inner container 82 can be sterilized and disinfected, preventing bacteria from breeding in the inner container 82 and maintaining the cleanliness of the inner container 82. Meanwhile, the sterilizing lighting lamp can provide illumination, helping users clearly see the internal situation of the refrigerator when using it, making it more convenient to take and place items.

In one embodiment, as shown in FIG. 2, the box body further includes a door body 6 and a switch detection module. The door body 6 is mounted on the main body 8. When the door body 6 is opened, items can be placed into the storage space 101 or taken out from the storage space 101. When the door body 6 is closed, the storage space 101 can be sealed.

The switch detection module is mounted on the side of the main body 8 close to the door body 6, and is configured to detect whether the door body 6 is opened.

The switch detection module can quickly and accurately detect whether the refrigerator door body 6 is closed, and timely transmit the information to the control terminal.

In the embodiment shown in FIG. 2, both the sterilizing lighting lamp and the switch detection module can be mounted on the same circuit board 7 for integration, saving space.

The vehicle-mounted refrigerator 100 provided by the embodiment of the present application can provide a continuous and stable low-temperature environment for refrigerating objects stored therein, and can also provide heating. Users can freely choose refrigeration or heating services according to specific usage scenarios. In addition, by providing the item detection module 2, the storage status in the refrigerator can be feed back in real time, and the user can be reminded in a timely manner to prevent items from being left in the refrigerator. By providing the switch detection module, the user can be reminded whether the refrigerator door is closed.

The assembly process of the vehicle-mounted refrigerator 100 provided by the embodiment of the present application is as follows:
(1) pre-embed the evaporator 32, vacuum insulation panel 4, item detection module 2, and heating film 5 in the refrigerator outer shell 81. Among them, the heating film 5 is wrapped around the evaporator 32, and the vacuum insulation panel 4 is arranged in five directions including front, rear, left, right, and bottom;
(2) place the inner container 82 in the outer shell 81, and at the same time make the evaporator 32 closely adhere to the outer wall of the inner container 82, with the item detection module 2 located at the bottom of the inner container 82;
(3) foam the space between the outer shell 81 and the inner container 82 to form a foamed insulation layer, and the evaporator 32, vacuum insulation panel 4, item detection module 2, and heating film 5 are wrapped in the foamed insulation layer; and
(4) mount the switch detection module on the main body 8 above and close to the door body 6.

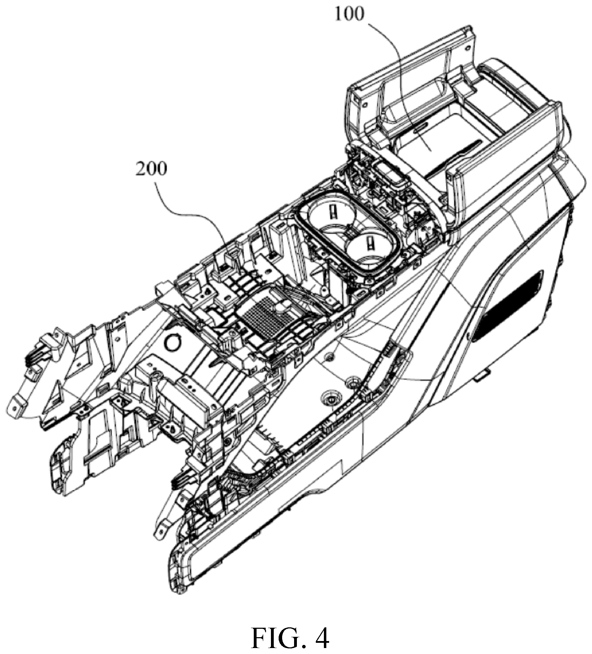

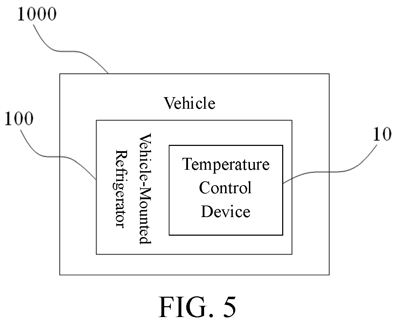

As shown in FIG. 4 and FIG. 5, the vehicle 1000 provided by the embodiment of the present application includes the above-mentioned vehicle-mounted refrigerator 100, which is mounted on the vehicle body 200 of the vehicle 1000. Preferably, the vehicle-mounted refrigerator 100 is located at the rear seat passage opening of the vehicle body 200.

The above are only preferred embodiments of the present application and are not intended to limit the present application. All modifications, equivalent replacements, and improvements made within the spirit and principles of the present application shall be included in the protection scope of the present application.

## Claims

1. A temperature control device (10) for a vehicle-mounted refrigerator (100), comprising:
a mounting bracket (1);
a condenser (31), the condenser (31) being mounted on the mounting bracket (1);
a first fan (36), the first fan (36) being mounted on the mounting bracket (1), the first fan (36) and the condenser (31) being stacked along a height direction of the vehicle-mounted refrigerator (100), and the first fan (36) being configured to blow gas to the condenser (31) for cooling the condenser (31).

2. The temperature control device (10) according to claim 1, wherein a center of the first fan (36) and a center of the condenser (31) are located on a straight line along the height direction of the vehicle-mounted refrigerator (100).

3. The temperature control device (10) according to claim 1 or 2, wherein along the height direction of the vehicle-mounted refrigerator (100), a projection of the condenser (31) falls within a projection of the first fan (36).

4. The temperature control device (10) according to any one of claims 1 to 3, wherein the first fan (36) is arranged adjacent to the condenser (31).

5. The temperature control device (10) according to any one of claims 1 to 4, wherein the first fan (36) is fixed to the condenser (31) to mount the first fan (36) on the mounting bracket (1).

6. The temperature control device (10) according to any one of claims 1 to 5, wherein the temperature control device (10) further comprises a second fan (37), and the second fan (37) is configured to discharge the gas, after cooling the condenser (31), to the outside of the vehicle-mounted refrigerator (100).

7. The temperature control device (10) according to claim 6, wherein along the height direction of the vehicle-mounted refrigerator (100), the condenser (31) is located between the first fan (36) and the second fan (37).

8. The temperature control device (10) according to claim 6 or 7, wherein the mounting bracket (1) comprises a first bracket (14) and a second bracket (13) connected to the first bracket (14), the condenser (31) and the first fan (36) are both mounted on the first bracket (14), and the second fan (37) is mounted on the second bracket (13).

9. The temperature control device (10) according to claim 8, wherein the temperature control device (10) further comprises a compressor (35) mounted on the second bracket (13).

10. The temperature control device (10) according to claim 9, wherein the condenser (31), the first fan (36), the second fan (37), and the compressor (35) are arranged on a same side of the first bracket (14).

11. The temperature control device (10) according to any one of claims 1 to 10, wherein the temperature control device (10) further comprises a compressor (35) and an acoustic package (38), the compressor (35) being mounted on the mounting bracket (1), and the acoustic package (38) wrapping an outer surface of the compressor (35).

12. A vehicle-mounted refrigerator (100), comprising a box body and the temperature control device (10) according to any one of claims 1 to 11, the box body is provided with a storage space (101), and the mounting bracket (1) is arranged on the box body.

13. The vehicle-mounted refrigerator (100) according to claim 12, wherein the box body comprises a main body (8), the main body (8) comprises an outer shell (81), an inner container (82), and a foamed insulation layer, the inner container (82) is mounted in the outer shell (81), the foamed insulation layer is arranged between the inner container (82) and the outer shell (81), and the storage space (101) is formed inside the inner container (82).

14. The vehicle-mounted refrigerator (100) according to claim 13, wherein the vehicle-mounted refrigerator (100) further comprises an item detection module (2), the item detection module (2) being mounted on an outer wall surface of the inner container (82), and the item detection module (2) being configured to detect whether an item is placed in the storage space (101).

15. The vehicle-mounted refrigerator (100) according to claim 13 or 14, wherein the vehicle-mounted refrigerator (100) further comprises an evaporator (32), and the evaporator (32) being arranged on an outer side wall of the inner container (82).

16. The vehicle-mounted refrigerator (100) according to claim 15, wherein the vehicle-mounted refrigerator (100) further comprises a vacuum insulation panel (4), the vacuum insulation panel (4) being embedded in the foamed insulation layer, and the vacuum insulation panel (4) being located between the evaporator (32) and the outer shell (81).

17. The vehicle-mounted refrigerator (100) according to claim 16, wherein the vehicle-mounted refrigerator (100) further comprises a heating film (5), the heating film (5) being embedded in the foamed insulation layer, and the heating film (5) being located between the evaporator (32) and the vacuum insulation panel (4).

18. The vehicle-mounted refrigerator (100) according to any one of claims 13 to 17, wherein the vehicle-mounted refrigerator (100) further comprises a temperature sensor, the temperature sensor being embedded in the foamed insulation layer, and the temperature sensor being configured to detect the temperature in the storage space (101).

19. The vehicle-mounted refrigerator (100) according to any one of claims 12 to 18, further comprises a sterilizing lighting lamp, the sterilizing lighting lamp is mounted on the box body and located in the storage space (101), and the sterilizing lighting lamp is configured to illuminate and sterilize the storage space (101).

20. A vehicle (1000), comprising the temperature control device (10) according to any one of claims 1 to 11 or the vehicle-mounted refrigerator (100) according to any one of claims 12 to 19.
